# EUROPEAN PATENT APPLICATION

(11) **EP 3 214 543 A1**
(43) Date of publication of application: **06.09.2017**
(21) Application number: 14904826.6
(22) Date of filing: 27.10.2014
(51) Int. Cl.: G06F 9/00

(54) **METHOD FOR SETTING ENCRYPTED STORAGE AREA, APPARATUS FOR SETTING ENCRYPTED STORAGE AREA, AND TERMINAL**

(71) Applicant: Yulong Computer Telecommunication Scientific (Shenzhen) Co. Ltd., Shenzhen, Guangdong 518057 (CN)
(72) Inventor: YANG, Dechang, Shenzhen Guangdong 518057 (CN)
(74) Representative: Lavoix
(86) International application number: PCT/CN2014/089600
(87) International publication number: WO 2016/065517

(57) **Abstract**

The present invention provides a method and apparatus of setting an encrypted storage area, and a terminal. The method of setting an encrypted storage area is applicable to a terminal having multiple operating systems, and comprises: in any operating system, encrypting, by using a preset key stored in the any operating system, a storage area set for the any operating system in a storage card; setting the encryption state of the storage area to be encrypted, and storing the encryption state into the storage area; and storing data that is required to be encrypted, of the any operating system, into the storage area. By means of the technical scheme of the present invention, the security of data stored in an encrypted storage area of a storage card can be ensured, and multiple operating systems of a terminal can share the remaining space of the storage card, and the requirements of the operating systems on high storage speed are satisfied.

## Description

### Technical Field

The present invention relates to the technical field of terminals, in particular relates to a method and an apparatus of setting an encrypted storage area, and a terminal.

### Background Technology

In an existing dual-system terminal, a security system and a common system can share an external device such as a storage card and so on. Since the security system has higher requirement for data security and needs to encrypt data stored externally in the storage card, and the common system has lower requirement for data confidentiality, therefore, the two operating systems of the terminal generally partition the storage card for using, and different operating systems can only mount different partitions (directories), to avoid their own confidential data being read by the other operating system.

However, in this way, there are the following drawbacks:
1. The corresponding relationship between the operating systems and the partitions is limited, an operating system can only use the space of the partition mounted by itself, and cannot use the space of the partition mounted by the other operating system, so that it is difficult for an operating system that needs larger storage space to obtain a higher storage speed.
2. The storage card is not encrypted, and when the storage card is connected into other terminals, other terminals can easily access the data in the storage card.

Therefore, there is a need for a new technical scheme, which can allow multiple operating systems to share the remaining space of the storage card while ensuring the security of data in the storage card.

### Summary of the Invention

Based on the above problems, the present invention provides a new technical scheme that can allow multiple operating systems to share the remaining space of the storage card while ensuring the security of data in the storage card.

In view of this, the present invention provides a method of setting an encrypted storage area, which is applicable to a terminal having multiple operating systems, and comprises: in any operating system, encrypting, by using a preset key stored in the any operating system, a storage area set for the any operating system in a storage card; setting the encryption state of the storage area to be an encrypted state, and storing the encryption state into the storage area; and storing data that is required to be encrypted, of the any operating system, into the storage area.

In this technical scheme, the security of data stored in the storage area by the operating system can be protected by encrypting the storage area set for the operating system in the storage card by using the preset key, wherein encrypting methods for the storage area include, but not limited to, encrypting by use of Ecryptfs (a virtual encrypted file system). In this technical scheme, the encryption state of the storage area can be set to be an encrypted state, the key for encrypting the encrypted area is stored in the operating system of the terminal, and the encryption state of the encrypted area is stored into the encrypted area of the storage card. In this way, the encryption state of the storage area read by another operating system of the terminal or another terminal when accessing the storage card can be an encrypted state, so that the data stored in the storage area by the operating system cannot be read, and the security of data in the encrypted storage area is effectively protected. At the same time, since only the storage area set for the any operating system in the storage card is encrypted, any of the multiple operating systems of the terminal can use all remaining space in the storage card, which breaks the limitation that the operating system can only use the storage area mounted by itself, improves the space utilization rate of the storage card, and satisfies the requirements of the operating systems on high storage speed.

For example, a folder is created in a root directory of the storage card for a security system in a dual-system terminal, the folder is encrypted by using a key in the security system, and the encryption state of the folder is stored in the folder. In this way, when a common operating system of the terminal requests for accessing the folder, it can be read that the encryption state of the folder is an encrypted state, and the common operating system cannot decrypt the folder due to not having the above key. Therefore, since the encryption state is stored in the encrypted folder, when exiting the security system, even if the security system removes the mounting of the folder, the folder is still encrypted, and the security of the folder will not be affected; meanwhile, due to the above reason, the mounting of all the mounted folders by the security system can be removed when exiting the security system, so that the common operating system can mount these folders. In the same way, since the folder is still encrypted, and the security of the folder is not affected, so that the security of data stored in the folder by the security system is ensured, and meanwhile both the security system and the common operating system can use the space in the storage card excluding the folder, which improves the space utilization rate of the storage card, and satisfies the requirements of the operating systems on high storage speed.

In addition, in this technical scheme, after the storage area set for the operating system in the storage card is encrypted, the data that is required to be encrypted, of the operating system, can be stored in the storage area. At this time, since the encryption state of the storage area is an encrypted state, all data written into the storage area by the operating system is encrypted, so that the security of data in the encrypted storage area is effectively protected. For example, a folder is created in a root directory of the storage card for the security system in a dual-system terminal, and after the folder is encrypted, the encryption state of the folder is stored in the folder. Therefore, after the data is stored in the folder of which the encryption state is an encrypted state, when the data is requested to be accessed, the folder must first be decrypted.

In the above technical scheme, preferably, the method also comprises: after exiting the any operating system, allowing another operating system of the multiple operating systems to access all remaining space in the storage card excluding the storage area.

In this technical scheme, after exiting the operating system, since the encryption state of the encrypted area is stored in the encrypted area, even if another operating system accesses the encrypted area, the another operating system cannot acquire the data in the encrypted area due to not having the key, and meanwhile, since the space excluding the encrypted area is not encrypted, the another operating system can use the other space, so as to satisfy the requirements of the operating systems on high storage speed. For example, when exiting the operating system, the mounting of all the folders that have been mounted by the operating system can be removed, so that another operating system can mount these folders, and for the folder that has been encrypted by the operating system, after the operating system removes the mounting of the folder, since the encryption state is stored in the folder, even if another operating system mounts the folder, the folder is still encrypted, the another operating system can only read the ciphertext, and thus the security of data in the folder will not be affected. Therefore, not only the security of data in the encrypted folder is ensured, but also another operating system can use the space excluding the folder in the storage card, which improves the space utilization rate of the storage card, and satisfies the requirements of the operating systems on high storage speed.

In the above technical scheme, preferably, before encrypting, by using the preset key stored in the any operating system, the storage area set for the any operating system in the storage card, the method also comprises: setting an existing key in the any operating system as the preset key; or creating a key for the any operating system, and setting the created key as the preset key; and storing the preset key in the any operating system.

In this technical scheme, the storage area of the storage card can be encrypted by using the existing or newly created key, and the key is stored in the operating system, so that the operating system can call the key to encrypt or decrypt the encrypted area of the storage card, and meanwhile, another operating system or terminal that does not have the key cannot decrypt the storage area and thus cannot acquire the data in the storage area, so that the security of data stored in the storage area by the operating system is protected.

In the above technical scheme, preferably, the method also comprises: encrypting the preset key stored in the any operating system; and decrypting the preset key before using the preset key to decrypt the storage area.

In this technical scheme, encrypting the preset key can prevent the preset key from being illegally erased or changed, which may result in the inability to decrypt the encrypted storage area of the storage card, and also can prevent the preset key from being easily intercepted and ensure the security of the key, thereby indirectly protecting the security of the encrypted storage area of the storage card.

In the above technical scheme, preferably, the method also comprises: replicating the preset key and storing the replicated preset key in at least one other operating system other than the any operating system of the multiple operating systems, so that the at least one other operating system can decrypt the storage area by using the replicated preset key.

In this technical scheme, the preset key of the operating system can be stored in another operating system so that another operating system can also decrypt and read the data of the operating system, for example, the key of a common operating system is stored in a higher-authority security system, then the encrypted folder of the common operating system can be decrypted through the key in the security system, so as to obtain the encrypted data of the common operating system. By this technical scheme, the flexibility to encrypt or decrypt the storage area is improved.

In the above technical scheme, preferably, the method also comprises: when a command to access the storage area is received, judging whether or not the preset key is stored in the operating system that has issued the command, wherein, when the judgment result is that the preset key is stored in the operating system that has issued the command, decrypting the storage area according to the preset key, so as to allow the operating system to access the storage area; and when the judgment result is that the preset key is not stored in the operating system that has issued the command, prohibiting the operating system to access the storage area.

In this technical scheme, when the operating system requests for accessing the encrypted storage area, if the operating system has a key for decrypting the storage area, the storage area is decrypted by using the key and can be mounted for the operating system to allow the operating system to access data in the storage area. In addition, in order to ensure the security of the storage area, the mounting of the storage area can be removed when exiting the operating system. When the operating system requests for accessing the encrypted storage area, if the operating system does not have a key for decrypting the storage area, the storage area cannot be decrypted and it can only be read that the encryption state of the storage area is an encrypted state, so that the data in the storage area cannot be acquired, and the security of data in the storage area is protected.

Another aspect of the present invention provides an apparatus for setting an encrypted storage area, which is applicable to a terminal having multiple operating systems, and comprises: a first encrypting unit, for encrypting, in any operating system, by using a preset key stored in the any operating system, a storage area set for the any operating system in a storage card; a setting unit, for setting the encryption state of the storage area to be an encrypted state; and a storing unit, for storing the encryption state into the storage area, and storing data that is required to be encrypted, of the any operating system, into the storage area.

In this technical scheme, the security of data stored in the storage area by the operating system can be protected by encrypting the storage area set for the operating system in the storage card by using the preset key, wherein encrypting methods for the storage area include, but not limited to, encrypting by use of Ecryptfs (a virtual encrypted file system). In this technical scheme, the encryption state of the storage area can be set to be an encrypted state, the key for encrypting the encrypted area is stored in the operating system of the terminal, and the encryption state of the encrypted area is stored into the encrypted area of the storage card. In this way, the encryption state of the storage area read by another operating system of the terminal or another terminal when accessing the storage card can be an encrypted state, so that the data stored in the storage area by the operating system cannot be read, and the security of data in the encrypted storage area is effectively protected. At the same time, since only the storage area set for the any operating system in the storage card is encrypted, any of the multiple operating systems of the terminal can use all remaining space in the storage card, which breaks the limitation that the operating system can only use the storage area mounted by itself, improves the space utilization rate of the storage card, and satisfies the requirements of the operating systems on high storage speed. For example, a folder is created in a root directory of the storage card for a security system in a dual-system terminal, the folder is encrypted by using a key in the security system, and the encryption state of the folder is stored in the folder. In this way, when a common operating system of the terminal requests for accessing the folder, it can be read that the encryption state of the folder is an encrypted state, and the common operating system cannot decrypt the folder due to not having the above key. Therefore, since the encryption state is stored in the encrypted folder, when exiting the security system, even if the security system removes the mounting of the folder, the folder is still encrypted, and the security of the folder will not be affected; meanwhile, due to the above reason, the mounting of all the mounted folders by the security system can be removed when exiting the security system, so that the common operating system can mount these folders. In the same way, since the folder is still encrypted, and the security of the folder is not affected, so that the security of data stored in the folder by the security system is ensured, and meanwhile both the security system and the common operating system can use the space in the storage card excluding the folder, which improves the space utilization rate of the storage card, and satisfies the requirements of the operating systems on high storage speed.

In addition, in this technical scheme, after the storage area set for the operating system in the storage card is encrypted, the data that is required to be encrypted, of the operating system, can be stored in the storage area. At this time, since the encryption state of the storage area is an encrypted state, all data written into the storage area by the operating system is encrypted, so that the security of data in the encrypted storage area is effectively protected. For example, a folder is created in a root directory of the storage card for the security system in a dual-system terminal, and after the folder is encrypted, the encryption state of the folder is stored in the folder. Therefore, after the data is stored in the folder of which the encryption state is an encrypted state, when the data is requested to be accessed, the folder must first be decrypted.

In the above technical scheme, preferably, the apparatus also comprises: a controlling unit, for allowing, after exiting the any operating system, another operating system of the multiple operating systems to access all remaining space in the storage card excluding the storage area.

In this technical scheme, after exiting the operating system, since the encryption state of the encrypted area is stored in the encrypted area, even if another operating system accesses the encrypted area, the another operating system cannot acquire the data in the encrypted area due to not having the key, and meanwhile, since the space excluding the encrypted area is not encrypted, the another operating system can use the other space, so as to satisfy the requirements of the operating systems on high storage speed. For example, when exiting the operating system, the mounting of all the folders that have been mounted by the operating system can be removed, so that another operating system can mount these folders, and for the folder that has been encrypted by the operating system, after the operating system removes the mounting of the folder, since the encryption state is stored in the folder, even if another operating system mounts the folder, the folder is still encrypted, the another operating system can only read the ciphertext, and thus the security of data in the folder will not be affected. Therefore, not only the security of data in the encrypted folder is ensured, but also another operating system can use the space excluding the folder in the storage card, which improves the space utilization rate of the storage card, and satisfies the requirements of the operating systems on high storage speed.

In the above technical scheme, preferably, the apparatus also comprises: a key setting unit, for setting an existing key in the any operating system as the preset key; or creating a key for the any operating system, and setting the created key as the preset key; and the storing unit is also for storing the preset key in the any operating system.

In this technical scheme, the storage area of the storage card can be encrypted by using the existing or newly created key, and the key is stored in the operating system, so that the operating system can call the key to encrypt or decrypt the encrypted area of the storage card, and meanwhile, another operating system or terminal that does not have the key cannot decrypt the storage area and thus cannot acquire the data in the storage area, so that the security of data stored in the storage area by the operating system is protected.

In the above technical scheme, preferably, the apparatus also comprises: a second encrypting unit, for encrypting the preset key stored in the any operating system; and a second decrypting unit, for decrypting the preset key before using the preset key to decrypt the storage area.

In this technical scheme, encrypting the preset key can prevent the preset key from being illegally erased or changed, which may result in the inability to decrypt the encrypted storage area of the storage card, and also can prevent the preset key from being easily intercepted and ensure the security of the key, thereby indirectly protecting the security of the encrypted storage area of the storage card.

In the above technical scheme, preferably, the apparatus also comprises: a replicating unit, for replicating the preset key; and the storing unit is also for storing the replicated preset key in at least one other operating system other than the any operating system of the multiple operating systems, so that the at least one other operating system can decrypt the storage area by using the replicated preset key.

In this technical scheme, the preset key of the operating system can be stored in another operating system so that another operating system can also decrypt and read the data of the operating system, for example, the key of a common operating system is stored in a higher-authority security system, then the encrypted folder of the common operating system can be decrypted through the key in the security system, so as to obtain the encrypted data of the common operating system. By this technical scheme, the flexibility to encrypt or decrypt the storage area is improved.

In the above technical scheme, preferably, the apparatus also comprises: a judging unit, for judging, when a command to access the storage area is received, whether or not the preset key is stored in the operating system that has issued the command; and a first decrypting unit, for decrypting the storage area according to the preset key when the judging unit judges that the preset key is stored in the operating system, so as to allow the operating system to access the storage area; and the controlling unit is also for prohibiting the operating system to access the storage area when the judging unit judges that the preset key is not stored in the operating system.

In this technical scheme, when the operating system requests for accessing the encrypted storage area, if the operating system has a key for decrypting the storage area, the storage area is decrypted by using the key and can be mounted for the operating system to allow the operating system to access data in the storage area. In addition, in order to ensure the security of the storage area, the mounting of the storage area can be removed when exiting the operating system. When the operating system requests for accessing the encrypted storage area, if the operating system does not have a key for decrypting the storage area, the storage area cannot be decrypted and it can only be read that the encryption state of the storage area is an encrypted state, so that the data in the storage area cannot be acquired, and the security of data in the storage area is protected.

A further aspect of the present invention provides a terminal, which has multiple operating systems, and comprises the apparatus for setting an encrypted storage area in the above technical scheme. Therefore, the terminal has all the advantageous effects of the apparatus for setting an encrypted storage area provided by the above technical scheme, which will not be described repeatedly herein.

By means of the above technical schemes, the multiple operating systems of the terminal can share the remaining space of the storage card while ensuring the security of data in the storage card, and the requirements of the operating systems on high storage speed are satisfied.

### BRIEF DESCRIPTION OF THE DRAWINGS

Fig. 1 shows a flow diagram of a method of setting an encrypted storage area according to an embodiment of the present invention;
Fig. 2 shows a flow diagram of a method of setting an encrypted storage area according to another embodiment of the present invention;
Fig. 3 shows a block diagram of an apparatus for setting an encrypted storage area according to an embodiment of the present invention;
Fig. 4 shows a block diagram of a terminal according to an embodiment of the present invention.

### DETAILED DESCRIPTION OF THE EMBODIMENTS

In order for the above objectives, characteristics and advantages of the present invention to be more clearly understood, the present invention is further described in detail below in conjunction with the accompanying drawings and specific embodiments. It should be noted that, as long as there is no conflict, the embodiments of the present application and features in the embodiments can be combined with one another.

A lot of specific details are elaborated in the following description in order for the present invention to be fully understood, however, the present invention can also be implemented in other ways which are different from those described herein, and thus the protection scope of the present invention is not limited to the specific embodiments disclosed hereinafter.

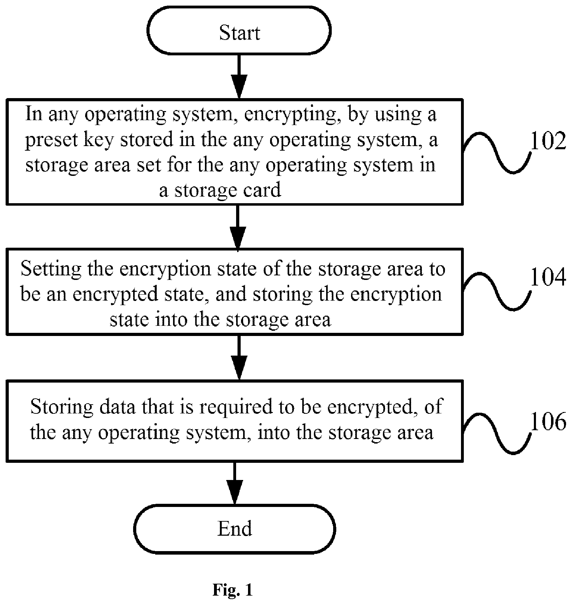

Fig. 1 shows a flow diagram of a method of setting an encrypted storage area according to an embodiment of the present invention.

As shown in Fig. 1, the method of setting an encrypted storage area according to the present embodiment is applicable to a terminal having multiple operating systems, and the method comprises:
Step 102: in any operating system, encrypting, by using a preset key stored in the any operating system, a storage area set for the any operating system in a storage card.

Step 104: setting the encryption state of the storage area to be an encrypted state, and storing the encryption state into the storage area.

Step 106: storing data that is required to be encrypted, of the any operating system, into the storage area.

In this technical scheme, the security of data stored in the storage area by the operating system can be protected by encrypting the storage area set for the operating system in the storage card by using the preset key, wherein encrypting methods for the storage area include, but not limited to, encrypting by use of Ecryptfs (a virtual encrypted file system). In this technical scheme, the encryption state of the storage area can be set to be an encrypted state, the key for encrypting the encrypted area is stored in the operating system of the terminal, and the encryption state of the encrypted area is stored into the encrypted area of the storage card. In this way, the encryption state of the storage area read by another operating system of the terminal or another terminal when accessing the storage card can be an encrypted state, so that the data stored in the storage area by the operating system cannot be read, and the security of data in the encrypted storage area is effectively protected. At the same time, since only the storage area set for the any operating system in the storage card is encrypted, any of the multiple operating systems of the terminal can use all remaining space in the storage card, which breaks the limitation that the operating system can only use the storage area mounted by itself, improves the space utilization rate of the storage card, and satisfies the requirements of the operating systems on high storage speed.

For example, a folder is created in a root directory of the storage card for a security system in a dual-system terminal, the folder is encrypted by using a key in the security system, and the encryption state of the folder is stored in the folder. In this way, when a common operating system of the terminal requests for accessing the folder, it can be read that the encryption state of the folder is an encrypted state, and the common operating system cannot decrypt the folder due to not having the above key. Therefore, since the encryption state is stored in the encrypted folder, when exiting the security system, even if the security system removes the mounting of the folder, the folder is still encrypted, and the security of the folder will not be affected; meanwhile, due to the above reason, the mounting of all the mounted folders by the security system can be removed when exiting the security system, so that the common operating system can mount these folders. In the same way, since the folder is still encrypted, and the security of the folder is not affected, so that the security of data stored in the folder by the security system is ensured, and meanwhile both the security system and the common operating system can use the space in the storage card excluding the folder, which improves the space utilization rate of the storage card, and satisfies the requirements of the operating systems on high storage speed.

In addition, in this technical scheme, after the storage area set for the operating system in the storage card is encrypted, the data that is required to be encrypted, of the operating system, can be stored in the storage area. At this time, since the encryption state of the storage area is an encrypted state, all data written into the storage area by the operating system is encrypted, so that the security of data in the encrypted storage area is effectively protected. For example, a folder is created in a root directory of the storage card for the security system in a dual-system terminal, and after the folder is encrypted, the encryption state of the folder is stored in the folder. Therefore, after the data is stored in the folder of which the encryption state is an encrypted state, when the data is requested to be accessed, the folder must first be decrypted.

In the above technical scheme, preferably, the method also comprises: after exiting the any operating system, allowing another operating system of the multiple operating systems to access all remaining space in the storage card excluding the storage area. In this technical scheme, after exiting the operating system, since the encryption state of the encrypted area is stored in the encrypted area, even if another operating system accesses the encrypted area, the another operating system cannot acquire the data in the encrypted area due to not having the key, and meanwhile, since the space excluding the encrypted area is not encrypted, the another operating system can use the other space, so as to satisfy the requirements of the operating systems on high storage speed. For example, when exiting the operating system, the mounting of all the folders that have been mounted by the operating system can be removed, so that another operating system can mount these folders, and for the folder that has been encrypted by the operating system, after the operating system removes the mounting of the folder, since the encryption state is stored in the folder, even if another operating system mounts the folder, the folder is still encrypted, the another operating system can only read the ciphertext, and thus the security of data in the folder will not be affected. Therefore, not only the security of data in the encrypted folder is ensured, but also another operating system can use the space excluding the folder in the storage card, which improves the space utilization rate of the storage card, and satisfies the requirements of the operating systems on high storage speed.

In the above technical scheme, preferably, before encrypting, by using the preset key stored in the any operating system, the storage area set for the any operating system in the storage card, the method also comprises: setting an existing key in the any operating system as the preset key; or creating a key for the any operating system, and setting the created key as the preset key; and storing the preset key in the any operating system.

In this technical scheme, the storage area of the storage card can be encrypted by using the existing or newly created key, and the key is stored in the operating system, so that the operating system can call the key to encrypt or decrypt the encrypted area of the storage card, and meanwhile, another operating system or terminal that does not have the key cannot decrypt the storage area and thus cannot acquire the data in the storage area, so that the security of data stored in the storage area by the operating system is protected.

In the above technical scheme, preferably, the method also comprises: encrypting the preset key stored in the any operating system; and decrypting the preset key before using the preset key to decrypt the storage area.

In this technical scheme, encrypting the preset key can prevent the preset key from being illegally erased or changed, which may result in the inability to decrypt the encrypted storage area of the storage card, and also can prevent the preset key from being easily intercepted and ensure the security of the key, thereby indirectly protecting the security of the encrypted storage area of the storage card.

In the above technical scheme, preferably, the method also comprises: replicating the preset key and storing the replicated preset key in at least one other operating system other than the any operating system of the multiple operating systems, so that the at least one other operating system can decrypt the storage area by using the replicated preset key.

In this technical scheme, the preset key of the operating system can be stored in another operating system so that another operating system can also decrypt and read the data of the operating system, for example, the key of a common operating system is stored in a higher-authority security system, then the encrypted folder of the common operating system can be decrypted through the key in the security system, so as to obtain the encrypted data of the common operating system. By this technical scheme, the flexibility to encrypt or decrypt the storage area is improved.

In the above technical scheme, preferably, the method also comprises: when a command to access the storage area is received, judging whether or not the preset key is stored in the operating system that has issued the command, wherein, when the judgment result is that the preset key is stored in the operating system that has issued the command, decrypting the storage area according to the preset key, so as to allow the operating system to access the storage area; and when the judgment result is that the preset key is not stored in the operating system that has issued the command, prohibiting the operating system to access the storage area.

In this technical scheme, when the operating system requests for accessing the encrypted storage area, if the operating system has a key for decrypting the storage area, the storage area is decrypted by using the key and can be mounted for the operating system to allow the operating system to access data in the storage area. In addition, in order to ensure the security of the storage area, the mounting of the storage area can be removed when exiting the operating system. When the operating system requests for accessing the encrypted storage area, if the operating system does not have a key for decrypting the storage area, the storage area cannot be decrypted and it can only be read that the encryption state of the storage area is an encrypted state, so that the data in the storage area cannot be acquired, and the security of data in the storage area is protected.

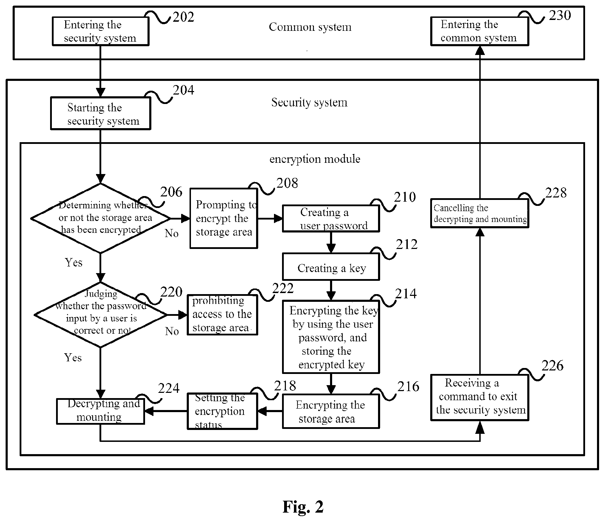

Fig. 2 shows a flow diagram of a method of setting an encrypted storage area according to another embodiment of the present invention.

As shown in Fig. 2, the method of setting an encrypted storage area according to the present embodiment is used for a dual-system terminal including a security system and a common system, and the method comprises:
Step 202: entering the security system from the common system.

Step 204: starting the security system. After the security system is started, the encryption module is entered, wherein the encryption module of the security system can encrypt and decrypt the storage area of the storage card and have a user interaction interface for users to operate.

Step 206: determining whether or not the storage area of the storage card has been encrypted, namely, acquiring the encryption state of the storage area, and when the storage area has not been encrypted, proceeding to step 208, otherwise proceeding to step 220.

Step 208: prompting to encrypt the storage area. When entering the security system, the encryption state of the storage area is first acquired, if it has not been encrypted, in order to ensure the security of data in the security system, it is prompted to encrypt the storage area of the storage card.

Step 210: creating a user password.

Step 212: creating a key. The created key is used for encrypting the storage area of the storage card.

Step 214: encrypting the key by using the user password, and storing the encrypted key. At the time of encrypting, a user password is first created, and then a key is created, the key is encrypted by using the user password, and the encrypted key is stored in the system partition of the security system. Wherein, encrypting the key can prevent the key from being illegally erased or changed, which may result in the inability to decrypt the encrypted storage area of the storage card, and also can prevent the key from being easily intercepted and ensure the security of the key, thereby indirectly protecting the security of the encrypted storage area of the storage card. While storing the key in the system partition of the security system can ensure that only the security system can call the key to encrypt or decrypt the encrypted area of the storage card, and meanwhile, the common system that does not have the key cannot decrypt the storage area and thus cannot acquire the data in the storage area, so that the security of data stored in the storage area by the security system is protected. Step 216: encrypting the storage area. The encrypted storage area is used for storing the data that is required to be encrypted, of the security system.

Step 218: setting the encryption status. Namely, the encryption state of the encrypted storage area is set to be an encrypted state, and the encryption state is stored in the encrypted storage area. At this time, all data written into the storage area of the storage card through the security system is encrypted.

Step 220: judging whether the password input by a user is correct or not, proceeding to step 224 when the judgment result is that the password input by a user is correct, and proceeding to step 222 when the judgment result is that the password input by a user is not correct. When entering the security system again, the encryption state of the storage area is first acquired, if the storage area has been encrypted, the user is prompted to input the password for authentication, the storage card is decrypted and mounted after the success of password authentication.

Step 222: prohibiting access to the storage area.

Step 224: decrypting and mounting. Namely, the encrypted storage area is decrypted by using the key and the encrypted storage area is mounted for the security system.

Step 226: receiving a command to exit the security system.

Step 228: cancelling the decrypting and mounting.

Step 230: entering the common system. When exiting the security system, the mounting of the encrypted storage area that has been mounted is removed, and all data in the encrypted storage area seen from the common system is ciphertext.

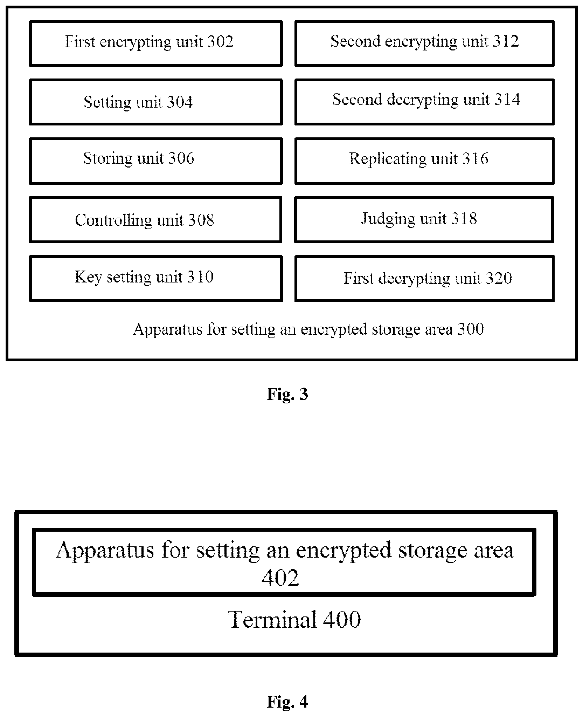

Fig. 3 shows a block diagram of an apparatus for setting an encrypted storage area according to an embodiment of the present invention.

As shown in Fig. 3, the apparatus 300 for setting an encrypted storage area according to the present embodiment is applicable to a terminal having multiple operating systems, and comprises: a first encrypting unit 302 that encrypts, in any operating system, by using a preset key stored in the any operating system, a storage area set for the any operating system in a storage card; a setting unit 304 that sets the encryption state of the storage area to be an encrypted state; and a storing unit 306 that stores the encryption state into the storage area, and stores data that is required to be encrypted, of the any operating system, into the storage area.

In this technical scheme, the security of data stored in the storage area by the operating system can be protected by encrypting the storage area set for the operating system in the storage card by using the preset key, wherein encrypting methods for the storage area include, but not limited to, encrypting by use of Ecryptfs (a virtual encrypted file system). In this technical scheme, the encryption state of the storage area can be set to be an encrypted state, the key for encrypting the encrypted area is stored in the operating system of the terminal, and the encryption state of the encrypted area is stored into the encrypted area of the storage card. In this way, the encryption state of the storage area read by another operating system of the terminal or another terminal when accessing the storage card can be an encrypted state, so that the data stored in the storage area by the operating system cannot be read, and the security of data in the encrypted storage area is effectively ensured. At the same time, since only the storage area set for the any operating system in the storage card is encrypted, any of the multiple operating systems of the terminal can use all remaining space in the storage card, which breaks the limitation that the operating system can only use the storage area mounted by itself, improves the space utilization rate of the storage card, and satisfies the requirements of the operating systems on high storage speed. For example, a folder is created in a root directory of the storage card for a security system in a dual-system terminal, the folder is encrypted by using a key in the security system, and the encryption state of the folder is stored in the folder. In this way, when a common operating system of the terminal requests for accessing the folder, it can be read that the encryption state of the folder is an encrypted state, and the common operating system cannot decrypt the folder due to not having the above key. Therefore, since the encryption state is stored in the encrypted folder, when exiting the security system, even if the security system removes the mounting of the folder, the folder is still encrypted, and the security of the folder is not affected; meanwhile, due to the above reason, the mounting of all the mounted folders by the security system can be removed when exiting the security system, so that the common operating system can mount these folders. In the same way, since the folder is still encrypted, and the security of the folder will not be affected, so that the security of data stored in the folder by the security system is ensured, and meanwhile both the security system and the common operating system can use the space in the storage card excluding the folder, which improves the space utilization rate of the storage card, and satisfies the requirements of the operating systems on high storage speed.

In addition, in this technical scheme, after the storage area set for the operating system in the storage card is encrypted, the data that is required to be encrypted, of the operating system, can be stored in the storage area. At this time, since the encryption state of the storage area is an encrypted state, all data written into the storage area by the operating system is encrypted, so that the security of data in the encrypted storage area is effectively protected. For example, a folder is created in a root directory of the storage card for the security system in a dual-system terminal, and after the folder is encrypted, the encryption state of the folder is stored in the folder. Therefore, after the data is stored in the folder of which the encryption state is an encrypted state, when the data is requested to be accessed, the folder must first be decrypted.

In the above technical scheme, preferably, the apparatus also comprises: a controlling unit 308 that allows, after exiting the any operating system, another operating system of the multiple operating systems to access all remaining space in the storage card excluding the storage area.

In this technical scheme, after exiting the operating system, since the encryption state of the encrypted area is stored in the encrypted area, even if another operating system accesses the encrypted area, the another operating system cannot acquire the data in the encrypted area due to not having the key, and meanwhile, since the space excluding the encrypted area is not encrypted, the another operating system can use the other space, so as to satisfy the requirements of the operating systems on high storage speed. For example, when exiting the operating system, the mounting of all the folders that have been mounted by the operating system can be removed, so that another operating system can mount these folders, and for the folder that has been encrypted by the operating system, after the operating system removes the mounting of the folder, since the encryption state is stored in the folder, even if another operating system mounts the folder, the folder is still encrypted, the another operating system can only read the ciphertext, and thus the security of data in the folder will not be affected. Therefore, not only the security of data in the encrypted folder is ensured, but also another operating system can use the space excluding the folder in the storage card, which improves the space utilization rate of the storage card, and satisfies the requirements of the operating systems on high storage speed.

In the above technical scheme, preferably, the apparatus also comprises: a key setting unit 310 that sets an existing key in the any operating system as the preset key; or creates a key for the any operating system, and setting the created key as the preset key; and the storing unit 306 also stores the preset key in the any operating system.

In this technical scheme, the storage area of the storage card can be encrypted by using the existing or newly created key, and the key is stored in the operating system, so that the operating system can call the key to encrypt or decrypt the encrypted area of the storage card, and meanwhile, another operating system or terminal that does not have the key cannot decrypt the storage area and thus cannot acquire the data in the storage area, so that the security of data stored in the storage area by the operating system is protected.

In the above technical scheme, preferably, the apparatus also comprises: a second encrypting unit 312 that encrypts the preset key stored in the any operating system; and a second decrypting unit 314 that decrypts the preset key before using the preset key to decrypt the storage area.

In this technical scheme, encrypting the preset key can prevent the preset key from being illegally erased or changed, which may result in the inability to decrypt the encrypted storage area of the storage card, and also can prevent the preset key from being easily intercepted and ensure the security of the key, thereby indirectly protecting the security of the encrypted storage area of the storage card.

In the above technical scheme, preferably, the apparatus also comprises: a replicating unit 316 that replicates the preset key; and the storing unit 306 also stores the replicated preset key in at least one other operating system other than the any operating system of the multiple operating systems, so that the at least one other operating system can decrypt the storage area by using the replicated preset key.

In this technical scheme, the preset key of the operating system can be stored in another operating system so that another operating system can also decrypt and read the data of the operating system, for example, the key of a common operating system is stored in a higher-authority security system, then the encrypted folder of the common operating system can be decrypted through the key in the security system, so as to obtain the encrypted data of the common operating system. By this technical scheme, the flexibility to encrypt or decrypt the storage area is improved.

In the above technical scheme, preferably, the apparatus also comprises: a judging unit 318 that judges, when a command to access the storage area is received, whether or not the key is stored in the operating system that has issued the command; and a first decrypting unit 320 that decrypts the storage area according to the preset key when the judging unit 318 judges that the preset key is stored in the operating system, so as to allow the operating system to access the storage area; and the controlling unit 308 also prohibits the operating system to access the storage area when the judging unit 318 judges that the preset key is not stored in the operating system.

In this technical scheme, when the operating system requests for accessing the encrypted storage area, if the operating system has a key for decrypting the storage area, the storage area is decrypted by using the key and can be mounted for the operating system to allow the operating system to access data in the storage area. In addition, in order to ensure the security of the storage area, the mounting of the storage area can be removed when exiting the operating system. When the operating system requests for accessing the encrypted storage area, if the operating system does not have a key for decrypting the storage area, the storage area cannot be decrypted and it can only be read that the encryption state of the storage area is an encrypted state, so that the data in the storage area cannot be acquired, and the security of data in the storage area is protected.

Fig. 4 shows a block diagram of a terminal according to an embodiment of the present invention.

As shown in Fig. 4, the terminal 400 according to an embodiment of the present invention comprises an apparatus 402 for setting an encrypted storage area (corresponding to the apparatus 300 for setting an encrypted storage area in the embodiment shown in Fig. 3).

Wherein, the apparatus 402 for setting an encrypted storage area can encrypt a storage area set for any operating system in a storage card by using a key stored in the any operating system of multiple operating systems, to ensure the security of data stored in the storage area by the any operating system, wherein encrypting methods for the storage area include, but not limited to, encrypting by use of Ecryptfs (a virtual encrypted file system).

The apparatus 402 for setting an encrypted storage area can also set the encryption state of the storage area to be an encrypted state, and store the encryption state of the encrypted area into the encrypted area of the storage card. In this way, the encryption state of the encrypted storage area read by another terminal or another operating system of the multiple operating systems when accessing the storage card can be an encrypted state, so that the data stored in the storage area by the any operating system cannot be read, and the security of data in the encrypted storage area is effectively protected. At the same time, since only the storage area is encrypted, any of the multiple operating systems of the terminal 400 can use all remaining space in the storage card excluding the storage area, which breaks the limitation that the operating system can only use the storage area mounted by itself, and improves the space utilization rate of the storage card. Therefore, by means of the above technical scheme, the multiple operating systems of the terminal can share the remaining space of the storage card while ensuring the security of data in the storage card.

The technical schemes of the present invention are described above in detail in conjunction with the accompanying drawings, and by means of the technical schemes of the present invention, the multiple operating systems of the terminal can share the remaining space of the storage card while ensuring the security of data in the storage card, and the requirements of the operating systems on high storage speed are satisfied.

According to an embodiment of the present invention, there is also provided a program product stored on a non-transitory computer-readable medium, used for setting an encrypted storage area for an operating system. The program product comprises computer-executable instructions to cause a computer system to perform the following steps: encrypting, by using a key stored in any operating system, a storage area set for the any operating system in a storage card; setting the encryption state of the storage area to be an encrypted state, and storing the encryption state into the storage area; and storing data that is required to be encrypted, of the any operating system, into the storage area.

According to an embodiment of the present invention, there is also provided a non-transitory computer-readable medium which stores a program product for setting an encrypted storage area for an operating system. The program product comprises computer-executable instructions to cause a computer system to perform the following steps: encrypting, by using a key stored in any operating system, a storage area set for the any operating system in a storage card; setting the encryption state of the storage area to be an encrypted state, and storing the encryption state into the storage area; and storing data that is required to be encrypted, of the any operating system, into the storage area.

According to an embodiment of the present invention, there is also provided a computer-readable program which causes a computer to perform the method of setting an encrypted storage area according to any one of the above technology schemes.

According to an embodiment of the present invention, there is also provided a storage medium that stores a computer-readable program wherein, the computer-readable program causes a computer to perform the method of setting an encrypted storage area according to any one of the above technology schemes.

In the present invention, terms such as "first", "second" are only for the purpose of describing, and are not to be construed as indicating or implying relative importance; the term "multiple" means two or more. For those ordinary skilled in the art, the specific meanings of the above terms in the present invention can be understood in light of specific situations.

The above described is merely preferred embodiments of the present invention and is not intended to limit the present invention, and for those skilled in the art, various modifications and changes may be made in the present invention. Any modifications, equivalent substitutions, improvements and the like made within the concept and principle of the present invention should be included within the protection scope of the present invention.

## Claims

1. A method of setting an encrypted storage area for operating system, applicable to a terminal having multiple operating systems, **characterized in that**, the method comprises:
in any operating system, encrypting, by using a preset key stored in the any operating system, a storage area set for the any operating system in a storage card;
setting the encryption state of the storage area to be an encrypted state, and storing the encryption state into the storage area; and
storing data that is required to be encrypted, of the any operating system, into the storage area.

2. The method according to claim 1, **characterized in that**, the method also comprises:
after exiting the any operating system, allowing another operating system of the multiple operating systems to access all remaining space in the storage card excluding the storage area.

3. The method according to claim 1 or 2, **characterized in that**, before encrypting, by using the preset key stored in the any operating system, the storage area set for the any operating system in the storage card, the method also comprises:
setting an existing key in the any operating system as the preset key; or creating a key for the any operating system, and setting the created key as the preset key; and
storing the preset key in the any operating system.

4. The method according to claim 3, **characterized in that**, the method also comprises:
encrypting the preset key stored in the any operating system; and
decrypting the preset key before using the preset key to decrypt the storage area.

5. The method according to claim 3, **characterized in that**, the method also comprises:
replicating the preset key and storing the replicated preset key in at least one other operating system other than the any operating system of the multiple operating systems, so that the at least one other operating system can decrypt the storage area by using the replicated preset key.

6. The method according to claim 5, **characterized in that**, the method also comprises:
when a command to access the storage area is received, judging whether or not the preset key is stored in the operating system that has issued the command,
wherein, when the judgment result is that the preset key is stored in the operating system that has issued the command, decrypting the storage area according to the preset key, so as to allow the operating system to access the storage area; and
when the judgment result is that the preset key is not stored in the operating system that has issued the command, prohibiting the operating system to access the storage area.

7. An apparatus for setting an encrypted storage area, applicable to a terminal having multiple operating systems, **characterized in that**, the apparatus comprises:
a first encrypting unit, for encrypting, in any operating system, by using a preset key stored in the any operating system, a storage area set for the any operating system in a storage card;
a setting unit, for setting the encryption state of the storage area to be an encrypted state; and
a storing unit, for storing the encryption state into the storage area, and storing data that is required to be encrypted, of the any operating system, into the storage area.

8. The apparatus according to claim 7, **characterized in that**, the apparatus also comprises:
a controlling unit, for allowing, after exiting the any operating system, another operating system of the multiple operating systems to access all remaining space in the storage card excluding the storage area.

9. The apparatus according to claim 7 or 8, **characterized in that**, the apparatus also comprises:
a key setting unit, for setting an existing key in the any operating system as the preset key; or creating a key for the any operating system, and setting the created key as the preset key; and
the storing unit is also for storing the preset key in the any operating system.

10. The apparatus according to claim 9, **characterized in that**, the apparatus also comprises:
a second encrypting unit, for encrypting the preset key stored in the any operating system; and
a second decrypting unit, for decrypting the preset key before using the preset key to decrypt the storage area.

11. The apparatus according to claim 9, **characterized in that**, the apparatus also comprises:
a replicating unit, for replicating the preset key; and
the storing unit is also for storing the replicated preset key in at least one other operating system other than the any operating system of the multiple operating systems, so that the at least one other operating system can decrypt the storage area by using the replicated preset key.

12. The apparatus according to claim 11, **characterized in that**, the apparatus also comprises:
a judging unit, for judging, when a command to access the storage area is received, whether or not the preset key is stored in the operating system that has issued the command; and
a first decrypting unit, for decrypting the storage area according to the preset key when the judging unit judges that the preset key is stored in the operating system, so as to allow the operating system to access the storage area; and
the controlling unit is also for prohibiting the operating system to access the storage area when the judging unit judges that the preset key is not stored in the operating system.

13. A terminal having multiple operating systems, **characterized in that**, the terminal comprises:
an apparatus for setting an encrypted storage area according to any one of claims 7 to 12.
